# EUROPÄISCHE PATENTSCHRIFT

(11) **EP 1 602 443 B1**
(45) Veröffentlichungstag und Bekanntmachung des Hinweises auf die Patenterteilung: **15.12.2010**
(21) Anmeldenummer: 05008454.0
(22) Anmeldetag: 19.04.2005
(51) Int. Cl.: B23P 11/02, B23B 31/02, B23Q 17/22

(54) **Verfahren und Vorrichtung zum Befestigen eines Werkzeuges in einer Werkzeugaufnahme**
Method and device for fixing a tool in a tool holder
Procédé et dispositif pour la fixation d'un outil dans un porte-outil

(30) Priorität: 04.06.2004 DE 102004027559
(43) Veröffentlichungstag der Anmeldung: 07.12.2005
(73) Patentinhaber: Bilz Werkzeugfabrik GmbH & Co. KG, 73760 Ostfildern (DE)
(72) Erfinder: Steudte, Rüdiger, 73770 Denkendorf (DE)
(74) Vertreter: Kratzsch, Volkhard

(56) Entgegenhaltungen:
- WO-A-03/106105
- DE-A1- 10 024 423
- DE-A1- 10 138 107
- DE-A1- 10 257 226

## Beschreibung

Die Erfindung bezieht sich auf ein Verfahren und eine Vorrichtung zum Befestigen eines Werkzeuges mit seinem Schaft in einer Aufnahme einer Werkzeugaufnahme durch Schrumpfen, bei dem die Werkzeugaufnahme erwärmt und zur Fixierung des eingebrachten Werkzeuges in dessen Soll-Position abgekühlt wird, mit den übrigen Merkmalen im Oberbegriff des Anspruchs 1, und des Anspruchs 8.

Ein Verfahren bzw. eine Vorrichtung dieser Art sind bekannt (DE 100 24 423 A1), wobei hinsichtlich weiterer Details zur Vermeidung unnötiger Wiederholungen auf diese Schrift verwiesen wird.

Der Erfindung liegt die Aufgabe zugrunde, ein Verfahren der eingangs genannten Art so zu gestalten, dass dadurch ein schnelles und einfaches präzises Einstellen der axialen Einstecktiefe des Werkzeugs in der Werkzeugaufnahme bei geringem Vorrichtungsaufwand möglich ist und dieses Verfahren einer Automatisierung zugänglich ist.

Die Aufgabe ist bei einem Verfahren der eingangs genannten Art gemäß der Erfindung durch die Merkmale im Anspruch 1 gelöst. Dadurch wird erreicht, dass eine schnelle und einfache präzise Einstellung der Einstecktiefe des Werkzeugs in der Werkzeugaufnahme mit einfachen und kostengünstigen Mitteln möglich ist, wobei das Verfahren einer Automatisierung dergestalt zugänglich ist, dass die Bedienungsperson den Schrumpfvorgang lediglich starten muss und die Einstellung und der weitere Verfahrensablauf dann selbsttätig erfolgen können.

Vorteilhaft kann ein Gegenstand gemäß Anspruch 2 sein. Hierbei dient der auswechselbare Aufnahmekörper zur Halterung und Führung der Werkzeugaufnahme bei deren Axialbewegung.

Weitere vorteilhafte Erfindungsmerkmale und Ausgestaltungen des Verfahrens ergeben sich aus den dazugehörigen Unteransprüchen.

Die Erfindung bezieht sich ferner auf eine Vorrichtung zum Befestigen eines Werkzeuges mit seinem Schaft in einer Aufnahme einer Werkzeugaufnahme durch Schrumpfen mit den Merkmalen im Anspruch 8. Eine Vorrichtung dieser Art ermöglicht einen automatischen Ablauf mit universeller Einsetzbarkeit für die Vorgänge nur Einstellen und Schrumpfen mit Einstellen. Die Vorrichtung benötigt nur wenige Bauteile, ist klein und kompakt und betriebssicher und bedingt nur einen geringen Aufwand. Sowohl die Einstellung des Werkzeuges auf die Soll-Position als auch das Einstellen der axialen Einstecktiefe mit oder ohne Schrumpfen lassen sich schnell und einfach bewerkstelligen und sind einer Automatisierung zugänglich.

Weitere Einzelheiten und Vorteile der Erfindung ergeben sich aus der nachfolgenden Beschreibung.

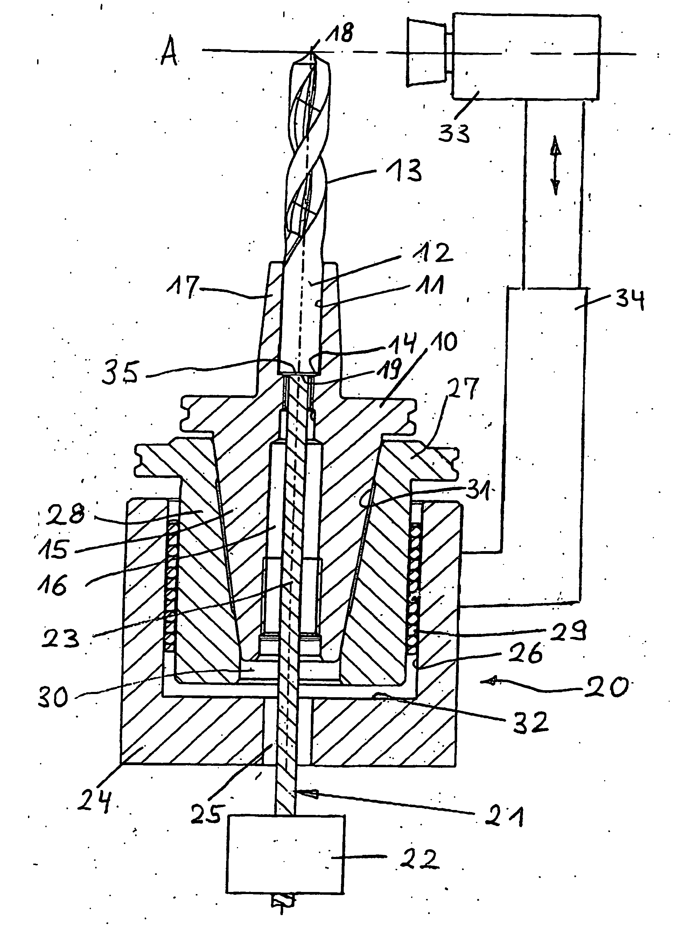

Das Verfahren und die Vorrichtung zur Durchführung des Verfahrens gemäß der Erfindung sind nachfolgend anhand eines in der Zeichnung gezeigten Ausführungsbeispieles näher erläutert. Die Zeichnung zeigt eine teilweise geschnittene schematische Seitenansicht einer Vorrichtung zur Schrumpfbefestigung eines Werkzeuges in einer Werkzeugaufnahme.

In der Zeichnung ist schematisch eine solche Werkzeugaufnahme 10 mit darin enthaltener Aufnahme 11, z. B. Bohrung, für die Aufnahme eines zylindrischen Schaftes 12 eines Werkzeuges 13 dargestellt. Bei der Werkzeugaufnahme 10 kann es sich um ein beliebiges Bauteil handeln, z. B. einen Spindelabschnitt, ein Futter, einen Teil eines Futters, eines Adapters od. dgl.. Beim Werkzeug 13 handelt es sich ebenfalls um ein beliebiges Werkzeug, z. B. um einen Bohrer, Gewindebohrer, Fräser, ein Stufenwerkzeug od. dgl.. Die Aufnahme 11 in der Werkzeugaufnahme 10 kann eine bodenseitige Stützfläche 14 aufweisen und ist im übrigen nach unten hin offen. Die Werkzeugaufnahme 10 weist im Bereich unterhalb der Aufnahme 11 einen Abschnitt 15 auf, der beim gezeigten Ausführungsbeispiel kegelförmig ist, wobei der Kegelwinkel im Selbsthemmungsbereich liegt. Beim gezeigten Ausführungsbeispiel ist der Abschnitt 15 mit einem Steilkegel versehen. Die Werkzeugaufnahme 10 weist im Zentrum einen Durchlass 16 auf, der vom in der Zeichnung unteren Ende des Abschnitts 15 bis zur Aufnahme 11 führt.

Zur Durchführung des Verfahrens zum kraftschlüssigen Befestigen des Werkzeuges 13 mit seinem Schaft 12 in der Aufnahme 11 der Werkzeugaufnahme 10 durch Schrumpfen ist eine Vorrichtung 20 vorgesehen, von der in der Zeichnung nur die zum Verständnis wichtigen Teile gezeigt sind. Beim kraftschlüssigen Einspannen des Werkzeuges 13 durch Schrumpfen wird in bekannter Weise die Werkzeugaufnahme 10 mit Vorzug induktiv erwärmt, zumindest im Bereich der die Aufnahme 11 enthaltenden Hülsenpartie 17, so dass sich die Aufnahme 11 vergrößert. Das Werkzeug 13 wird mit seinem Schaft 12 in die derart vergrößerte Aufnahme 11 eingeführt. Beim anschließenden Abkühlen der Werkzeugaufnahme 10, zumindest im Bereich der Hülsenpartie 17, wird der Schaft 12 des Werkzeugs 13 in der Aufnahme 11, die aufgrund der Abkühlung geschrumpft ist, kraftschlüssig gehalten. Beim Einspannen des Schaftes 12 des Werkzeugs 13 wird die axiale Einstecktiefe des Schaftes 12 in die Aufnahme 11 exakt eingestellt.

Die Vorrichtung 20 weist ein vertikal gerichtetes Positionierelement 21 auf, das mittels einer nur schematisch angedeuteten Antriebseinrichtung 22 axial, d. h. in vertikaler Richtung, verstellbar und einstellbar ist. Das Positionierelement 21 ist aus einem vertikalen Stößel 23 gebildet, z. B. aus einer Gewindestange. Die Vorrichtung 20 weist ferner einen nur schematisch angedeuteten Grundkörper 24 auf, der z. B. etwa topfförmig gestaltet ist und im Boden einen Durchlass 25 für das Positionierelement 21 enthält. Der Grundkörper 24 weist eine im wesentlichen zylindrische Aufnahme 26 auf, in der ein Aufnahmekörper 27 mit einem zylindrischen Abschnitt 28 aufgenommen ist. Zwischen dem Aufnahmekörper 27 und dem Grundkörper 24, insbesondere innerhalb der zylindrischen Aufnahme 26, ist eine Lagereinrichtung 29 z. B. in Form einer Kugelbüchse angeordnet. Der Aufnahmekörper 27 ist im Grundkörper 24 auswechselbar aufgenommen und mittels der Lagereinrichtung 29 axial beweglich sowie drehbar gehalten. Der Aufnahmekörper 27 enthält im Zentrum einen Durchlass 30 für das Positionierelement 21. Der Aufnahmekörper 27 dient der Aufnahme der Werkzeugaufnahme 10, insbesondere des Abschnitts 15 dieser, und ist hierzu an den z. B. kegelförmigen Abschnitt 15 ensprechend angepasst. Er enthält eine zentrale kegelstumpfförmige Aufnahme 31, in die die Werkzeugaufnahme 10 mit ihrem Abschnitt 15 eingebracht wird und dann darin gespannt wird. Der Kegelwinkel der Aufnahme 31 ist an denjenigen des Abschnitts 15 angepasst und liegt im Bereich der Selbsthemmung, so dass beim Einbringen des Abschnitts 15 in die Aufnahme 31 ein Spannen mit fester Verbindung selbsttätig erfolgt und ein besonderes Spannen nicht notwendig ist.

Der Grundkörper 24 kann an geeigneter Stelle eine Referenzverkörperung 32, z. B. eine Referenzfläche, aufweisen, die beispielsweise im Bodenbereich des Grundkörpers 24 oder statt dessen auch am oberen Stirnbereich oder an anderer Stelle vorgesehen ist und zusammen mit dem Aufnahmekörper 27 als Referenzverkörperung wirksam ist. Zur Einstellung und Vorgabe der jeweiligen Soll-Position A, d. h. Höhe, des Werkzeugs 13 im Bereich seines freien Endes 18, z. B. einer dortigen Spitze, Schneide od. dgl., ist eine Einrichtung 33 vorgesehen, die nur schematisch angedeutet ist und über eine Halterung 34 höhenverstellbar z. B. mit dem Grundkörper 24 verbunden ist. Die Einrichtung 33 kann aus einer Messkamera, einem Profilprojektor, einem Höhenreißer od. dgl. bestehen und ist vorzugsweise in Bezug auf die Referenzverkörperung 32 höhenverstellbar und in der jeweils eingestellten Position feststellbar.

Das vertikal ausgerichtete und in dieser Richtung beispielsweise zusätzlich geführte Positionierelement 21 durchsetzt den Grundkörper 24, den Aufnahmekörper 27 und die Werkzeugaufnahme 10 im Bereich der jeweiligen Durchlässe 25, 30 bzw. 16 von unten her kommend und kann bei der Einstellung der axialen Einstecktiefe des Schaftes 12 auch noch in die Aufnahme 11 eingreifen. Das Positionierelement 21 weist am oberen Ende eine Antastfläche 35, z. B. eine plane Stirnfläche, auf, mit der das Positionierelement 21 die zugewandte untere Fläche 19 des Schaftes 12 antasten kann.

Prinzipiell läuft das Verfahren zum Befestigen des Werkzeuges 13 mit seinem Schaft 12 in der Aufnahme 11 der Werkzeugaufnahme 10 durch Schrumpfbefestigung folgendermaßen ab. Das Werkzeug 13 wird zunächst mit seinem Schaft 12 so tief wie möglich innerhalb der Aufnahme 11 der Werkzeugaufnahme 10 durch Schrumpfen befestigt, so dass die Werkzeugaufnahme 10 mit eingeschrumpftem Werkzeug 13 vorliegt. Diese wird sodann mit ihrem Abschnitt 15 in die Aufnahme 31 des Aufnahmekörpers 27 eingebracht und darin befestigt. Je nach Gestaltung des Abschnitts 28 und der zugeordneten Form der Aufnahme 31 erfolgt die Befestigung durch äußeres Spannen des Aufnahmekörpers 27. Beim gezeigten Ausführungsbeispiel mit Steilkegel ergibt sich das Spannen nach Einbringung der Werkzeugaufnahme 10 aufgrund der Selbsthemmung von selbst, so dass nicht besonders gespannt werden muss und allein aufgrund der Selbsthemmung eine feste Befestigung der Werkzeugaufnahme 10 im Aufnahmekörper 27 geschieht. Das Positionierelement 21 wird durch Axialbewegung mittels der Antriebseinrichtung 22 innerhalb des Aufnahmekörpers 27 und der Werkzeugaufnahme 10 mit der Antastfläche 35 an der Fläche 19 des Schaftes 12 zur axialen Anlage gebracht und sodann mittels der Antriebseinrichtung 22 mitsamt dem Werkzeug 12, der Werkzeugaufnahme 10 und dem Aufnahmekörper 27 relativ zum Grundkörper 24 axial so weit angehoben, bis das Werkzeug 12 mit seinem freien Ende 18, z. B. der dortigen Spitze, Schneide od. dgl., die vorher eingestellte und vorgegebene Soll-Position A bezogen auf die Referenzverkörperung 32 erreicht hat. Diese Axialbewegung der Einheit, bestehend aus Aufnahmekörper 27, Werkzeugaufnahme 10 und Werkzeug 13, relativ zum Grundkörper 24 wird ermöglicht und erleichtert durch die Lagereinrichtung 29, insbesondere Kugelbüchse. Diese gestattet zugleich auch eine Drehung der genannten Einheit und somit auch eine Drehung des Werkzeuges 13 um die Längsmittelachse in eine jeweils gewünschte Position, wodurch die Vermessung besonders einfach ist. Befindet sich das freie Ende 18 des Werkzeugs 13 auf Soll-Position A, wird die Werkzeugaufnahme 10 zwecks Freigabe des Werkzeugs 13 z. B. auf induktivem Wege erwärmt. Hierbei weitet sich die Aufnahme 11 so weit, dass die Schrumpfbefestigung des Werkzeuges 13 aufgehoben wird und aufgrund dessen nun die Werkzeugaufnahme 10 aufgrund der Gewichtskraft mitsamt dem Aufnahmekörper 27 auf die als Anschlag wirksame Referenzverkörperung 32 herabfällt, während das Werkzeug 13 vom Positionierelement 21 in Soll-Position gehalten bleibt. Das Werkzeug 13 bleibt also auf dem Stößel 23 stehen und somit bleibt die eingestellte Soll-Position A des Werkzeugs 13 erhalten. Zwecks Fixierung des Schaftes 12 in der Werkzeugaufnahme 10 in dieser eingestellten Soll-Position durch Schrumpfen kühlt nun die Werkzeugaufnahme 10 ab, wodurch die Schrumpfbefestigung des Werkzeugs 13 in der vorgegebenen Soll-Position erfolgt.

Man erkennt, dass das erfindungsgemäße Verfahren grundsätzlich dadurch gekennzeichnet ist, dass die Werkzeugaufnahme 10 mit darin insbesondere durch Schrumpfen befestigtem Werkzeug 13 durch Antasten des Endes des Schaftes 12 mit dem Positionierelement 21 und Anheben dieses so weit angehoben wird, bis das Werkzeug 12 mit seinem freien Ende 18, insbesondere der dortigen Spitze, Schneide od. dgl., eine vorgegebene Soll-Position A erreicht hat, die vorher eingestellt worden ist, dass die Werkzeugaufnahme 10 zwecks Freigabe des Werkzeuges 13 erwärmt wird und aufgrund der Gewichtskraft in eine vorgegebene abgestützte Referenzposition herabfällt, während das Werkzeug 13 vom Positionierelement 21 in Soll-Position A gehalten bleibt, und dass die Werkzeugaufnahme 10 zwecks Fixierung des Werkzeugs 13 durch Schrumpfen abkühlt bzw. abgekühlt wird. Man erkennt hierbei, dass der Aufnahmekörper 27 nicht zwingend ist, soweit eine Zentrierung und vertikale Bewegung der Werkzeugaufnahme 10 gewährleistet ist. Beim gezeigten Ausführungsbeispiel dienen hierzu der Aufnahmekörper 27 und der Grundkörper 24.

Die Vorrichtung 20 ist einfach, kostengünstig, betriebssicher und vielfältig einsetzbar, z. B. für die Vorgänge nur Einstellen der axialen Einstecktiefe des Werkzeugs 13 und Schrumpfen mit Einstellen dieser. Die Vorrichtung 20 weist nur wenige Bauteile auf und benötigt keine automatischen Achsen z. B. für den Antrieb des Positionierelements. Von Vorteil sind bei den erfindungsgemäßen Verfahren und der Vorrichtung, dass aufgrund der Drehbarkeit mittels der Lagereinrichtung 29 die Werkzeugaufnahme 10 mit Werkzeug 13 um die Längsmittelachse gedreht werden kann und somit zum Vermessen ausgerichtet werden kann. Der Aufnahmekörper 27 ist auswechselbar und austauschbar gegen andere Aufnahmekörper 27 mit anders gestalteter Aufnahme 31, so dass eine Anpassung an unterschiedliche Formen und Größen von Werkzeugaufnahmen 10 in einfacher Weise möglich ist. Vorteilhaft ist insbesondere der automatische Ablauf des Einstellverfahrens. Die Bedienungsperson muss nach dem Einsetzen der Werkzeugaufnahme 10 mit darin gespanntem Werkzeug 13 in den Aufnahmekörper 27 und der Einstellung der Soll-Position A auf das entsprechende Sollmaß mit dem Positionierelement 21 nur noch den Schrumpfvorgang starten. Der Ablauf der Einstellung erfolgt dann selbsttätig. Die Lagereinrichtung 29 erlaubt eine leichtgängige axiale Veschiebung zusätzlich zur Drehung des gespannten Werkzeugs 13. Von Vorteil ist ferner, dass mittels des Positionierelements 21 eine schnelle und präzise Einstellung des freien Endes 18 des Werkzeugs 13 auf die vorgegebene Soll-Position A möglich ist. Ferner ist die Schrumpfbefestigung des Werkzeuges 13 mit entsprechender Einstellung der axialen Einstecktiefe ebenfalls schnell und einfach zu bewerkstelligen, da die Werkzeugaufnahme 10 mit Aufnahmekörper 27 dann, wenn das Werkzeug 13 nicht mehr gespannt ist, selbsttätig aufgrund der Gewichtskräfte nach unten auf die Referenzverkörperung 32 herabfällt, die als Anschlag wirksam ist.

## Patentansprüche

1. Verfahren zum Befestigen eines Werkzeuges (13) mit seinem Schaft (12) in einer Aufnahme (11) einer Werkzeugaufnahme (10) durch Schrumpfen, bei dem die Werkzeugaufnahme (10) erwärmt und zur Fixierung des eingebrachten Werkzeuges (13) in dessen Soll-Position (A) abgekühlt wird, wobei die axiale Einstecktiefe des Schaftes (12) in der Aufnahme (11) durch Einstellung mittels eines Positionierelements (21) vorgegeben wird,
**dadurch gekennzeichnet,**
**dass** die Werkzeugaufnahme (10) mit darin befestigtem Werkzeug (13) durch Antasten des Schaftendes (19) mit dem Positionierelement (21) und Anheben dieses so weit angehoben wird, bis das Werkzeug (13) mit seinem freien Ende (18), insbesondere der dortigen Spitze, Schneide od. dgl., eine vorgebene Soll-Position (A) erreicht hat, dass die Werkzeugaufnahme (10) zwecks Freigabe des Werkzeugs (13) erwärmt wird und aufgrund der Gewichtskraft auf eine vorgegebene, als Anschlag wirksame, abgestützte Referenzverkörperung (32) herabfällt, während das Werkzeug (13) vom Positionierelement (21) in Soll-Position (A) gehalten bleibt, und dass die Werkzeugaufnahme (10) zwecks Fixierung des Schafts (12) des Werkzeuges (13) durch Schrumpfen abkühlt bzw. abgekühlt wird.

2. Verfahren nach Anspruch 1,
**dadurch gekennzeichnet,**
**dass** die Werkzeugaufnahme (10) mit darin befestigtem Werkzeug (13) in einem daran angepassten Aufnahmekörper (27) befestigt wird, dass das Positionierelement (21) durch Axialbewegung innerhalb des Aufnahmekörpers (27) und der Werkzeugaufnahme (10) am Ende (19) des Schaftes (12) zur axialen Anlage gebracht und mitsamt dem Werkzeug (13), der Werkzeugaufnahme (10) und dem Aufnahmekörper (27) so weit axial angehoben wird, bis das Werkzeug (13) mit seinem freien Ende (18), insbesondere der dortigen Spitze, Schneide od. dgl., die vorgegebene Soll-Position (A) bezogen auf eine Referenzverkörperung (32) erreicht hat, dass die Werkzeugaufnahme (10) zwecks Freigabe des Werkzeuges (13) erwärmt wird und aufgrund der Gewichtskraft mitsamt dem Aufnahmekörper (27) auf die als Anschlag wirksame Referenzverkörperung (32) herabfällt, während das Werkzeug (13) vom Positionierelement (21) in Soll-Position (A) gehalten bleibt, und dass die Werkzeugaufnahme (10) zwecks Fixierung des Schafts (12) des Werkzeuges (13) durch Schrumpfen abkühlt bzw. abgekühlt wird.

3. Verfahren nach Anspruch 2,
**dadurch gekennzeichnet,**
**dass** der Aufnahmekörper (27) zumindest axial beweglich in einem Grundkörper (24) aufgenommen ist, der die Referenzverkörperung (32), z. B. eine Referenzfläche, aufweist und durch den hindurch das Positionierelement (21) axial verschiebbar ist.

4. Verfahren nach Anspruch 2 oder 3,
dass die Werkzeugaufnahme (10) mit einem Abschnitt (15) in eine entsprechende Aufnahme (31) des Aufnahmekörpers (27) eingebracht und darin gespannt wird.

5. Verfahren nach Anspruch 4,
**dadurch gekennzeichnet,**
**dass** die Werkzeugaufnahme (10) mit einem kegelförmigen Abschnitt (15) in eine entsprechend kegelförmige Aufnahme (31) des Aufnahmekörpers (27) eingebracht und darin gespannt wird.

6. Verfahren nach Anspruch 5,
**dadurch gekennzeichnet,**
**dass** der kegelförmige Abschnitt (15) infolge Selbsthemmung in der kegelförmigen Aufnahme (31) gespannt wird.

7. Verfahren nach einem der Ansprüche 3 bis 6,
**dadurch gekennzeichnet,**
**dass** der Aufnahmekörper (27) im Grundkörper (24) in Richtung der Längsmittelachse axial beweglich und zugleich um die Längsmittelachse drehbar ist.

8. Vorrichtung zum Befestigen eines Werkzeuges (13) mit seinem Schaft (12) in einer Aufnahme (11) einer Werkzeugaufnahme (10) durch Schrumpfen, bei dem die Werkzeugaufnahme (10) erwärmt und zur Fixierung des eingebrachten Werkzeugs (13) in dessen Soll-Position (A) abgekühlt wird, mit einem axial verstellbaren Positionierelement (21) zur Vorgabe der axialen Einstecktiefe des Schaftes (12) in der Aufnahme (11) der Werkzeugaufnahme (10),
**dadurch gekennzeichnet,**
**dass** in einem Grundkörper (24) auswechselbar ein Aufnahmeköprer (27) für die Werkzeugaufnahme (10) axial beweglich und drehbar aufgenommen ist
und der Grundkörper (24), der Aufnahmekörper (27) und die Werkzeugaufnahme (10) im Zentrum Durchlässe (25, 30, 16) aufweisen, durch die sich das Positionierelement (21) hindurch bis zum Ende (19) des Schaftes (12) zur Antastung dieses erstreckt.

9. Vorrichtung nach Anspruch 8,
**dadurch gekennzeichnet,**
**dass** das Positionierelement (21) aus einem axial verstellbaren, Vertikalen Stößel (23) gebildet ist, der den Grundkörper (24), den Aufnahmekörper (27) und die Werkzeugaufnahme (10) von unten her kommend durchsetzt.

10. Vorrichtung nach Anspruch 8 oder 9,
**dadurch gekennzeichnet,**
**dass** das Positionierelement (21) eine Antriebseinrichtung (22) zur axialen Betätigung aufweist.

11. Vorrichtung nach einem der Ansprüche 8 bis 10,
**dadurch gekennzeichnet,**
**dass** der Grundkörper (24) eine zumindest im wesentlichen zylindrische Aufnahme (26) aufweist, in der der Aufnahmekörper (27) mit einem zugeordneten, etwa zylindrischen Abschnitt (28) aufgenommen ist.

12. Vorrichtung nach einem der Ansprüche 8 bis 11,
**dadurch gekennzeichnet,**
**dass** zwischen dem Aufnahmekörper (27) und dem Grundkörper (24), insbesondere innerhalb dessen Aufnahme (26), eine Lagereinrichtung (29), insbesondere eine Kugelbüchse, angeordnet ist.

13. Vorrichtung nach einem der Ansprüche 8 bis 12,
**dadurch gekennzeichnet,**
**dass** der Grundkörper (24) eine Referenzverkörperung (32), z. B. eine Referenzfläche, aufweist, an der die Werkzeugaufnahme (10) und/oder der Aufnahmekörper (27) beim Herabfallen anschlagen können.

14. Vorrichtung nach einem der Ansprüche 8 bis 13,
**dadurch gekennzeichnet,**
**dass** zur Einstellung und Vorgabe der Soll-Position (A) des Werkzeuges (13) eine Einrichtung (33), z. B. eine Messkamera, ein Profilprojektor, ein Höhenreißer od. dgl., vorgesehen ist, vorzugsweise mit Höhenverstellbarkeit in Bezug auf die Referenzverkörperung (32).

## Claims

1. Method for fixing a tool (13) with the shank (12) thereof in a receptacle (11) of a tool holder (10) by shrink fitting, in which the tool holder (10) is heated and is cooled for fixing the inserted tool (13) in the desired position (A) thereof, wherein the axial insertion depth of the shank (12) in the receptacle (11) is predetermined by setting by means of a positioning element (21), **characterized in that** the tool holder (10) with tool (13) fixed therein, by touching the shank end (19) with the positioning element (21) and by lifting the latter, is lifted until the tool (13), with the free end (18) thereof, in particular the point there, the cutting edge or the like, has reached a predetermined desired position (A), **in that** the tool holder (10) is heated for releasing the tool (13) and, on account of the force due to weight, falls onto a predetermined supported physical reference object (32) effective as a stop, while the tool (13) is kept in the desired position (A) by the positioning element (21), and **in that** the tool holder (10) cools down or is cooled for fixing the shank (12) of the tool (13) by shrink fitting.

2. Method according to Claim 1, **characterized in that** the tool holder (10) with tool (13) fixed therein is fixed in an accommodating body (27) adapted thereto, **in that** the positioning element (21), by axial movement inside the accommodating body (27) and the tool holder (10), is brought axially to bear against the end (19) of the shank (12) and is lifted axially together with the tool (13), the tool holder (10) and the accommodating body (27) until the tool (13), with the free end (18) thereof, in particular the point there, the cutting edge or the like, has reached the predetermined desired position (A) with respect to a physical reference object (32), **in that** the tool holder (10) is heated for releasing the tool (13) and, on account of the force due to weight, falls together with the accommodating body (27) onto the physical reference object (32) effective as a stop, while the tool (13) is kept in the desired position (A) by the positioning element (21), and **in that** the tool holder (10) cools down or is cooled for fixing the shank (12) of the tool (13) by shrink fitting.

3. Method according to Claim 2, **characterized in that** the accommodating body (27) is accommodated in an at least axially movable manner in a basic body (24) which has the physical reference object (32), e.g. a reference surface, and through which the positioning element (21) can be displaced axially.

4. Method according to Claim 2 or 3, **characterized in that** the tool holder (10) is inserted with a section (15) into a corresponding receptacle (31) of the accommodating body (27) and is clamped therein.

5. Method according to Claim 4, **characterized in that** the tool holder (10) is inserted with a tapered section (15) into a correspondingly tapered receptacle (31) of the accommodating body (27) and is clamped therein.

6. Method according to Claim 5, **characterized in that** the tapered section (15) is clamped in the tapered receptacle (31) as a result of self-locking.

7. Method according to one of Claims 3 to 6, **characterized in that** the accommodating body (27) is axially movable in the basic body (24) in the direction of the longitudinal centre axis and is at the same time rotatable about the longitudinal centre axis.

8. Device for fixing a tool (13) with the shank (12) thereof in a receptacle (11) of a tool holder (10) by shrink fitting, in which the tool holder (10) is heated and is cooled for fixing the inserted tool (13) in the desired position (A) thereof, comprising an axially adjustable positioning element (21) for predetermining the axial insertion depth of the shank (12) in the receptacle (11) of the tool holder (10), **characterized in that** an accommodating body (27) for the tool holder (10) is interchangeably accommodated in a basic body (24) in an axially movable and rotatable manner, and the basic body (24), the accommodating body (27) and the tool holder (10) have passages (25, 30, 16) in the centre, through which the positioning element (21) extends up to the end (19) of the shank (12) for touching the same.

9. Device according to Claim 8, **characterized in that** the positioning element (21) is formed from an axially adjustable, vertical plunger (23) which passes through the basic body (24), the accommodating body (27) and the tool holder (10) from below.

10. Device according to Claim 8 or 9, **characterized in that** the positioning element (21) has a drive means (22) for the axial actuation.

11. Device according to one of Claims 8 to 10, **characterized in that** the basic body (24) has an at least substantially cylindrical receptacle (26) in which the accommodating body (27) is accommodated with an associated, approximately cylindrical section (28).

12. Device according to one of Claims 8 to 11, **characterized in that** a bearing means (29), in particular a ball bushing, is arranged between the accommodating body (27) and the basic body (24), in particular within the receptacle (26) thereof.

13. Device according to one of Claims 8 to 12, **characterized in that** the basic body (24) has a physical reference object (32), e.g. a reference surface, which the tool holder (10) and/or the accommodating body (27) can strike when falling.

14. Device according to one of Claims 8 to 13, **characterized in that** a means (33), e.g. a measuring camera, a profile projector, a height gauge or the like, preferably with vertical adjustability with respect to the physical reference object (32), is provided for setting and predetermining the desired position (A) of the tool (13).

## Revendications

1. Procédé pour fixer un outil (13) avec son arbre (12) dans un logement (11) d'un porte-outil (10) par retrait, dans lequel le porte-outil (10) est chauffé et, pour fixer l'outil introduit (13) dans sa position de consigne (A), est refroidi, la profondeur d'enfoncement axiale de l'arbre (12) dans le logement (11) étant prédéfinie par ajustement au moyen d'un élément de positionnement (21),
**caractérisé en ce que**
le porte-outil (10) est soulevé avec l'outil (13) fixé dans celui-ci par contact de l'extrémité d'arbre (19) avec l'élément de positionnement (21) et par soulèvement de ce dernier jusqu'à ce que l'outil (13), avec son extrémité libre (18), en particulier la pointe, le tranchant, ou similaire s'y trouvant, ait atteint une position de consigne prédéfinie (A), **en ce que** le porte-outil (10) est chauffé en vue de libérer l'outil (13) et descend, sous l'effet de la force de pesanteur, sur un corps de référence supporté prédéfini (32), servant de butée, tandis que l'outil (13) reste maintenu par l'élément de positionnement (21) dans la position de consigne (A), et **en ce que** le porte-outil (10), en vue de fixer l'arbre (12) de l'outil (13), se refroidit ou est refroidi par retrait.

2. Procédé selon la revendication 1,
**caractérisé en ce que**
le porte-outil (10) avec l'outil (13) fixé dans celui-ci est fixé dans un corps de réception (27) adapté à celui-ci, **en ce que** l'élément de positionnement (21), par déplacement axial à l'intérieur du corps de réception (27) et du porte-outil (10), est amené en appui axial à l'extrémité (19) de l'arbre (12), et, conjointement à l'outil (13), au porte-outil (10) et au corps de réception (27), est soulevé axialement jusqu'à ce que l'outil (13) avec son extrémité libre (18), en particulier la pointe, le tranchant ou similaire, s'y trouvant, ait atteint la position de consigne prédéfinie (A) par rapport à un corps de référence (32), **en ce que** le porte-outil (10), est chauffé en vue de libérer l'outil (13) et descend, sous l'effet de la force de pesanteur, conjointement avec le corps de réception (27), sur le corps de référence (32) servant de butée, tandis que l'outil (13) reste maintenu dans la position de consigne (A) par l'élément de positionnement (21), et **en ce que** le porte-outil (10), en vue de la fixation de l'arbre (12) de l'outil (13), se refroidit ou est refroidi par retrait.

3. Procédé selon la revendication 2,
**caractérisé en ce que**
le corps de réception (27) est reçu au moins axialement de manière mobile dans un corps de base (24), qui présente le corps de référence (32), par exemple une surface de référence, et à travers lequel l'élément de positionnement (21) peut être déplacé axialement.

4. Procédé selon la revendication 2 ou 3,
**caractérisé en ce que**
le porte-outil (10) est introduit avec une portion (15) dans un logement correspondant (31) du corps de réception (27) et y est serré.

5. Procédé selon la revendication 4,
**caractérisé en ce que**
le porte-outil (10) est introduit avec une portion de forme conique (15) dans un logement correspondant de forme conique (31) du corps de réception (27) et y est serré.

6. Procédé selon la revendication 5,
**caractérisé en ce que**
la portion de forme conique (15) est serrée sous l'effet d'un autoblocage dans le logement de forme conique (31).

7. Procédé selon l'une quelconque des revendications 3 à 6,
**caractérisé en ce que**
le corps de réception (27) peut être déplacé axialement dans le corps de base (24) dans la direction de l'axe médian longitudinal et peut en même temps tourner autour de l'axe médian longitudinal.

8. Dispositif de fixation d'un outil (13) avec son arbre (12) dans un logement (11) d'un porte outil (10) par retrait, dans lequel le porte-outil (10) est chauffé et, pour la fixation de l'outil introduit (13) dans sa position de consigne (A) est refroidi, comprenant un élément de positionnement déplaçable axialement (21) pour prédéfinir la profondeur d'enfoncement axiale de l'arbre (12) dans le logement (11) du porte-outil (10),
**caractérisé en ce**
**qu'**un corps de réception (27) pour le porte-outil (10) est déplaçable axialement et reçu de manière rotative et de manière remplaçable dans un corps de base (24), et le corps de base (24), le corps de réception (27) et le porte-outil (10) présentent au centre des passages (25, 30, 16) à travers lesquels l'élément de positionnement (21) s'étend jusqu'à l'extrémité (19) de l'arbre (12) en vue de venir en contact avec celui-ci.

9. Dispositif selon la revendication 8,
**caractérisé en ce que**
l'élément de positionnement (21) est constitué d'une tige-poussoir verticale (23), déplaçable axialement, qui traverse le corps de base (24), le corps de réception (27) et le porte-outil (10) par le bas.

10. Dispositif selon la revendication 8 ou 9,
**caractérisé en ce que**
l'élément de positionnement (21) présente un dispositif d'entraînement (22) pour la commande axiale.

11. Dispositif selon l'une quelconque des revendications 8 à 10,
**caractérisé en ce que**
le corps de base (24) présente un logement au moins essentiellement cylindrique (26), dans lequel le corps de réception (27) est reçu avec une portion associée approximativement cylindrique (28).

12. Dispositif selon l'une quelconque des revendications 8 à 11,
**caractérisé en ce**
**qu'**un dispositif de palier (29), en particulier une douille sphérique, est disposé entre le corps de réception (27) et le corps de base (24), notamment à l'intérieur de son logement (26).

13. Dispositif selon l'une quelconque des revendications 8 à 12,
**caractérisé en ce que**
le corps de base (24) présente un corps de référence (32), par exemple une surface de référence, contre laquelle le porte-outil (10) et/ou le corps de réception (27) peuvent buter lorsqu'ils sont descendus.

14. Dispositif selon l'une quelconque des revendications 8 à 13,
**caractérisé en ce**
**qu'**un dispositif (33), par exemple une caméra de mesure, un projecteur de profil, un troussequin ou similaire, est prévu pour ajuster et prédéfinir la position de consigne (A) de l'outil (13), de préférence avec une capacité de réglage en hauteur par rapport au corps de référence (32).
